# EUROPÄISCHE PATENTANMELDUNG

(11) **EP 1 760 370 A2**
(43) Veröffentlichungstag der Anmeldung: **07.03.2007**
(21) Anmeldenummer: 06016176.7
(22) Anmeldetag: 03.08.2006
(51) Int. Cl.: F16J 15/06, F16J 15/32

(54) **Abdichtung**

(30) Priorität: 31.08.2005 DE 102005041553
(71) Anmelder: AB SKF, S-415 50 Göteborg (SE)
(72) Erfinder: Kurth, Jürgen, 51519 Odenthal (DE)
(74) Vertreter: Kohl, Thomas

(57) **Zusammenfassung**

Bei einer Abdichtung wenigstens eines axialen Endabschnitts einer zum Drehen und Leiten eines Fluids vorgesehenen Hohlwelle (10) in einer Höhlung eines weiteren Bauteils (20) mit einem zwischen dem Bauteil (20) und der Welle (10) angeordneten Dichtring (30), ist der Dichtring (30) mit einer Dichtlippe (34) zum Anliegen am Außenmantel des Endabschnitts ausgebildet, ist der Dichtring (30) über das Ende der Welle (10) axial überstehend ausgebildet und sind von dem überstehenden Bereich im wesentlichen umschlossen das Fluid filternde und/oder einen Durchflussquerschnitt des Fluids bestimmende Mittel (40) angeordnet.

## Beschreibung

Die Erfindung betrifft eine Abdichtung wenigstens eines axialen Endabschnitts einer zum Drehen und zum Leiten eines Fluids vorgesehenen Hohlwelle in einer Höhlung eines weiteren Bauteils mit einem zwischen dem Bauteil und der Welle angeordnetem Dichtring.

Es ist bekannt, an einer Übergangsstelle eines zum Drehen vorgesehenen Rohres zum Leiten eines Fluids in einer nicht zum Drehen vorgesehenen Fortleitungseinrichtung des Fluids Dichtungen einzusetzen. Weiterhin ist es ebenfalls bekannt, im Leitungsverlauf zum Führen eines Fluids Filter wie auch einen Durchflussquerschnitt des Fluids begrenzende Blenden einzusetzen.

Eine Aufgabe der vorliegenden Erfindung ist es, eine Abdichtung wenigstens eines axialen Endabschnitts einer zum Drehen und zum Leiten eines Fluids vorgesehenen Hohlwelle in einer Höhlung eines weiteren Bauteils zu schaffen, so dass eine dafür vorgesehene Dichtung zusammen mit weiteren Mitteln zum Beeinflussen von Eigenschaften des Fluidstroms kompakt ausgebildet und auf einfache Art und Weise montiert werden kann.

Die Aufgabe wird durch den Gegenstand des Anspruchs 1 gelöst. Vorteilhafte Ausgestaltungen sind in den Unteransprüchen beschrieben.

Gemäß Anspruch 1 ist bei einer Abdichtung wenigstens eines axialen Endabschnitts einer zum Drehen und Leiten eines Fluids vorgesehenen Hohlwelle in einer Höhlung eines weiteren Bauteils mit einem zwischen dem Bauteil und der Welle angeordneten Dichtring, der Dichtring mit einer Dichtlippe zum Anliegen am Außenmantel des Endabschnitts ausgebildet, ist der Dichtring über das Ende der Welle axial überstehend ausgebildet und sind von dem überstehenden Bereich im wesentlichen umschlossen das Fluid filternde und/oder einen Durchflussquerschnitt des Fluids bestimmende Mittel angeordnet.

Insbesondere gegenüber Ausführungen, bei denen der Dichtring, das Mittel zum Filtern des Fluids und das Mittel zum Bestimmen des Durchflussquerschnitts des Fluids axial hintereinander, beispielsweise durch Distanzelemente getrennt, in Position gehalten werden, ist bei der erfindungsgemäßen Abdichtung die Montage dahingehend vereinfacht, dass im wesentlichen nur der Dichtring entsprechend zu montieren ist, wobei sozusagen in ihm integriert bereits die Mittel zum Filtern des Fluids sowie zum Bestimmen des Durchflussquerschnitts des Fluids integriert sind und damit besagte Mittel mit dem Dichtring sozusagen mit montiert werden. Neben dieser Montagevereinfachung wird dabei gleichzeitig mit Vorteil eine hohe Kompaktheit einer derartigen Funktionsgruppe erreicht.

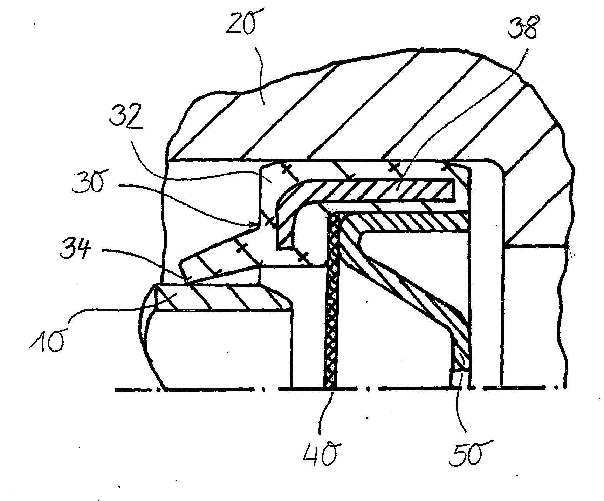

Weitere Vorteile, Merkmale und Einzelheiten der Erfindung ergeben sich aus dem im folgenden beschriebenen Ausführungsbeispiel der Erfindung anhand der Figur.

Die Figur zeigt als ein Ausführungsbeispiel der Erfindung ausschnittsweise eine obere Hälfte eines Längsschnitts durch eine Abdichtung eines axialen Endabschnitts einer zum Drehen und Leiten eines Fluids vorgesehenen Hohlwelle 10 in einer Höhlung eines weiteren Bauteils 20. Bei dem weiteren Bauteil 20 handelt es sich beispielsweise um ein Gehäuse eines Maschinenelements.

Zwischen dem Endabschnitt der Hohlwelle 10 und dem weiteren Bauteil 20 ist ein Dichtring 30 angeordnet. Der Dichtring 30 umfasst dabei ein Elastomerteil 32 sowie ein Versteifungsteil 38. Das Elastomerteil 32 besteht dabei aus einem Polymermaterial und ist eine Dichtlippe 34 ausbildend gestaltet, die radial umlaufend zum abdichtenden Anliegen am Außenmantel des Endabschnitts der Hohlwelle 10 vorgesehen ist. Dabei sichert die Dichtlippe 34 das dynamische Abdichten zwischen der zum Drehen vorgesehenen Hohlwelle 10 und dem weiteren nicht zum Drehen vorgesehenen Bauteil 20.

Der Dichtring 30 ist weiterhin derart gestaltet, dass er über das Ende der Hohlwelle 10 axial übersteht, wobei das Elastomerteil 32 in diesem Bereich einen zylinderartigen Außenmantel ausbildend gestaltet ist, über den der Dichtring 30 im weiteren Bauteil 20 befestigt und damit statisch abdichtend angeordnet ist. Im wesentlichen in diesem überstehenden Bereich des Dichtrings 30 ist das Versteifungsteil 38 angeordnet, das im wesentlichen vollständig vom Elastomerteil 32 umschlossen ist. Dabei ist das Versteifungsteil 38 beispielsweise aus einem Metall, einem Kunststoff oder dergleichen ausgebildet. Weiterhin ist das Versteifungsteil 38 von hohlzylinderartiger Form, wobei der Hohlzylinder an dem der Dichtlippe 34 zugewandten axialen Ende sich radial nach innen hin erstreckend ringartig fortgesetzt ist. Dadurch wird ein Sitz des Dichtrings 30 im weiteren Bauteil 20 gewährleistet, der dauerhaft ist und einen Durchfluss von Kältemittel zwischen besagtem Außenmantel des Dichtrings 30 und dem gegenüberliegenden Innenmantel der Höhlung des weiteren Bauteils 20 sicher verhindert.

Der über das Ende der Hohlwelle 10 hinausstehende Teil des Elastomerteils 32 weist weiterhin einen im wesentlichen zylindrischen Innenmantel auf, der ein Mittel 40 zum Filtern des Kältemittels, beispielsweise in der Ausbildung als ein scheibenartiges feinmaschiges Sieb, und weiterhin ein Mittel 50 zum Bestimmen des Durchflussquerschnitts des Fluids, im folgenden kurz als Blende bezeichnet, umschließt. Dabei ist die ringartige Blende in einem zentralen Bereich mit einem wannenartigen Längsschnitt ausgebildet, wobei der Wannenboden sozusagen lochscheibenartig ausgebildet ist und die Blende weiterhin am Wannenrand axial in Richtung zum lochscheibenartigen Wannenboden hin hohlzylinderartig fortgesetzt ist. Besagter hohlzylinderartiger Bereich der Blende ist dabei presssitzartig im Dichtring 30 angeordnet. Dadurch ist gleichzeitig auch das Sieb sicher im Dichtring 30 gehalten.

Die wannenartige Ausbildung der Blende sorgt weiterhin mit Vorteil dafür, dass der lochscheibenartige Bereich als eigentliches, den Durchflussquerschnitt bestimmendes Element, in einer vorgebbaren Distanz zum feinmaschigen Sieb angeordnet ist. Dabei wird durch das feinmaschige Sieb mit einem ausreichend großen freien Durchflussquerschnitt verhindert, dass die Öffnung der Blende beispielsweise durch Fremdpartikel verengt oder gar verschlossen wird. Die Blende ist dabei ähnlich wie das Versteifungsteil 38 beispielsweise aus einem Metall, insbesondere einem Blech durch entsprechendes, insbesondere spanloses Umformen, oder auch einem Kunststoff hergestellt.

Dadurch, dass die Blende und das feinmaschige Sieb sozusagen in den Dichtring 30 integriert sind, ist eine Montage dieser Funktionsbaugruppe, die sozusagen die Funktionen Drosselung, Filterung, statische und dynamische Abdichtung gleichzeitig übernimmt, entsprechend einfach, schnell und unkompliziert, da lediglich die Funktionsbaugruppe als ganzes zwischen der Hohlwelle 10 und dem weiteren Bauteil 20 anzuordnen ist.

### Bezugszeichenliste

- 10: Hohlwelle

- 20: weiteres Bauteil

- 30: Dichtring
- 32: Elastomerteil
- 34: Dichtlippe
- 38: Versteifungsteil

- 40: filterndes Mittel

- 50: Durchflussquerschnitt bestimmendes Mittel

## Patentansprüche

1. Abdichtung wenigstens eines axialen Endabschnitts einer zum Drehen und Leiten eines Fluids vorgesehenen Hohlwelle in einer Höhlung eines weiteren Bauteils mit einem zwischen dem Bauteil und der Welle angeordneten Dichtring, wobei der Dichtring mit einer Dichtlippe zum Anliegen am Außenmantel des Endabschnitts ausgebildet ist, wobei der Dichtring über das Ende der Welle axial überstehend ausgebildet ist, und wobei von dem überstehenden Bereich im wesentlichen umschlossen das Fluid filternde und/oder einen Durchflussquerschnitt des Fluids bestimmende Mittel angeordnet sind.

2. Abdichtung nach Anspruch 1, wobei der Dichtring ein Elastomerteil aus einem Polymermaterial umfasst.

3. Abdichtung nach einem der Ansprüche 1 oder 2, wobei der Dichtring ein Versteifungsteil umfasst.

4. Abdichtung nach Anspruch 3, wobei das Versteifungsteil vom Elastomerteil im wesentlichen umschlossen ist.

5. Abdichtung nach einem der Ansprüche 3 oder 4, wobei das Versteifungsteil im wesentlichen innerhalb des überstehenden Bereichs angeordnet ist.

6. Abdichtung nach einem der Ansprüche 3 bis 5, wobei das Versteifungsteil hohlzylinderartig ausgebildet ist.

7. Abdichtung nach Anspruch 7, wobei das Versteifungsteil an dem der Dichtlippe zugewandten axialen Ende des Hohlzylinders sich in etwa radial nach innen hin erstreckend ringartig fortgesetzt ist.

8. Abdichtung nach einem der Ansprüche 3 bis 7, wobei das Versteifungsteil aus einem Metall, Kunststoff oder dergleichen ausgebildet ist.

9. Abdichtung nach einem der Ansprüche 1 bis 8, wobei das filternde Mittel scheibenartig ausgebildet ist.

10. Abdichtung nach einem der Ansprüche 1 bis 9, wobei das filternde Mittel als ein insbesondere feinmaschiges Sieb ausgebildet ist.

11. Abdichtung nach einem der Ansprüche 1 bis 10, wobei das den Durchflussquerschnitt bestimmende Mittel ringartig ausgebildet ist.

12. Abdichtung nach einem der Ansprüche 1 bis 11, wobei das den Durchflussquerschnitt bestimmende Mittel einen lochscheibenartigen Bereich umfasst.

13. Abdichtung nach einem der Ansprüche 1 bis 12, wobei das den Durchflussquerschnitt bestimmende Mittel in einem zentralen Bereich mit einem wannenartigen Längsschnitt und am Rand mit einem den Wannenrand axial in Richtung zum lochscheibenartigen Wannenboden hin fortsetzenden, hohlzylinderartigen Bereich ausgebildet ist.
